# FASCICULE DE BREVET EUROPEEN

(11) **EP 2 727 204 B1**
(45) Date de publication et mention de la délivrance du brevet: **12.08.2015**
(21) Numéro de dépôt: 12730968.0
(22) Date de dépôt: 29.06.2012
(51) Int. Cl.: H02H 3/02, H02H 7/26, H02H 3/093, H02H 7/122

(54) **DISPOSITIF DE PROTECTION CONTRE UN DEFAUT DE COURT-CIRCUIT DANS UN RESEAU ELECTRIQUE**
VORRICHTUNG ZUM SCHUTZ VOR KURZSCHLÜSSEN IN EINEM ELEKTRISCHEN NETZWERK
DEVICE FOR PROTECTING AGAINST A SHORT-CIRCUIT FAULT IN AN ELECTRICAL NETWORK

(30) Priorité: 29.06.2011 FR 1155829
(43) Date de publication de la demande: 07.05.2014
(73) Titulaire: ALSTOM Technology Ltd, 5400 Baden (CH)
(72) Inventeur: GARCIA-SOTO, Guillermo, 91300 Massy (FR); LOZI, Dominique, 77810 Thomery (FR); HOU, Xiang, 91300 Massy (FR)
(74) Mandataire: Ahner, Philippe
(86) Numéro de dépôt international: PCT/EP2012/062718
(87) Numéro de publication internationale: WO 2013/001066

(56) Documents cités:
- WO-A1-2011/003708
- US-A- 4 208 691

## Description

### DOMAINE TECHNIQUE

L'invention se situe dans le domaine de la sécurité dans les réseaux électriques monophasés ou triphasés et concerne plus spécifiquement un dispositif de protection contre un défaut de court-circuit selon la revendication 1.

L'invention concerne également un procédé de protection contre un défaut de court-circuit selon la revendication 6 et un programme d'ordinateur comportant des instructions pour réaliser les étapes dudit procédé selon la revendication 11.

### ÉTAT DE LA TECHNIQUE ANTÉRIEURE

Les convertisseurs statiques sont des circuits électriques utilisant des semi-conducteurs de puissance en régime de découpage pour traiter l'énergie électrique à haut rendement et assurer les fonctionnalités suivantes:
- Transformation : génération d'une tension alternative à partir d'une source continue et *vice versa ;*
- Régulation : alimentation constante d'une charge à partir d'une source variable ;
- Adaptation : alimentation d'une charge basse tension à partir d'une source haute tension et *vice versa.*

Un convertisseur statique, pour une tension donnée, est dimensionné au minimum par son intensité nominale afin de fournir les puissances active et réactive nécessaires aux charges du réseau aval qu'il alimente. Le réseau est généralement équipé d'un système de protection des phases qui agit sélectivement en chaque point désiré du réseau, en aval d'un dispositif principal de protection qui est muni d'un seuil de déclenchement avec une temporisation déterminée. Le document WO 2011/003708 divulgue un dispositif de protection contre un défaut de court-circuit survenant dans un réseau électrique alimenté par un convertisseur statique.

Un problème de l'art antérieur provient du fait qu'en cas de défaut de court-circuit dans le réseau, le convertisseur statique doit fournir l'intensité nécessaire correspondant au moins au seuil de déclenchement du dispositif principal au bout de la temporisation de ce dernier. Cette surintensité, à composante majoritairement réactive, peut représenter plusieurs fois l'intensité nominale du convertisseur statique. Cependant, du fait de ses composants, le convertisseur statique n'admet pas toujours de telles surintensités. Il est donc nécessaire de le surdimensionner à plusieurs fois sa valeur nominale, donc augmenter sensiblement son volume et son coût.

Un but de l'invention est d'éviter un tel surdimensionnement des convertisseurs statiques.

### EXPOSÉ DE L'INVENTION

Ce but est atteint au moyen d'un dispositif de protection contre un défaut de court-circuit selon la revendication 1.

Préférentiellement, ledit module d'aide au déclenchement comporte au moins un convertisseur AC-AC et au moins une inductance de sortie.

Le procédé de protection contre un défaut de court-circuit survenant dans le réseau électrique comporte les étapes selon la revendication 6.

Dans un premier mode de mise en oeuvre du procédé selon l'invention, le module d'aide au déclenchement est commandé pour absorber une partie de puissance active fournie au réseau.

Dans un deuxième mode de mise en oeuvre du procédé selon l'invention, le module d'aide au déclenchement est commandé pour fournir un courant supplémentaire pour commander le déclenchement dudit module sécurité en cas de défaut de court circuit.

Dans un troisième mode de mise en oeuvre du procédé selon l'invention, le module d'aide au déclenchement est utilisé pour réaliser un filtrage actif au point de connexion du convertisseur statique au réseau.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- la figures 1a, représente un premier mode de réalisation d'un dispositif de protection contre un défaut de court-circuit selon l'invention ;
- la figure 1b représente un deuxième mode de réalisation d'un dispositif de protection contre un défaut de court-circuit selon l'invention ;
- les figures 2a, 2b et 2c représentent un schéma électrique d'un module d'aide au déclenchement dudit module sécurité selon l'invention ;
- la figure 3 représente un troisième mode de réalisation d'un dispositif de protection contre un défaut de court-circuit selon l'invention ;
- la figure 4 représente un quatrième mode de réalisation d'un dispositif de protection contre un défaut de court-circuit selon l'invention ;
- la figure 5 représente un cinquième mode de réalisation d'un dispositif de protection contre un défaut de court-circuit selon l'invention ;
- La figure 6 illustre schématiquement un cas d'utilisation du dispositif de l'invention.

### EXPOSÉ DÉTAILLÉ DE MODES DE RÉALISATION PARTICULIERS

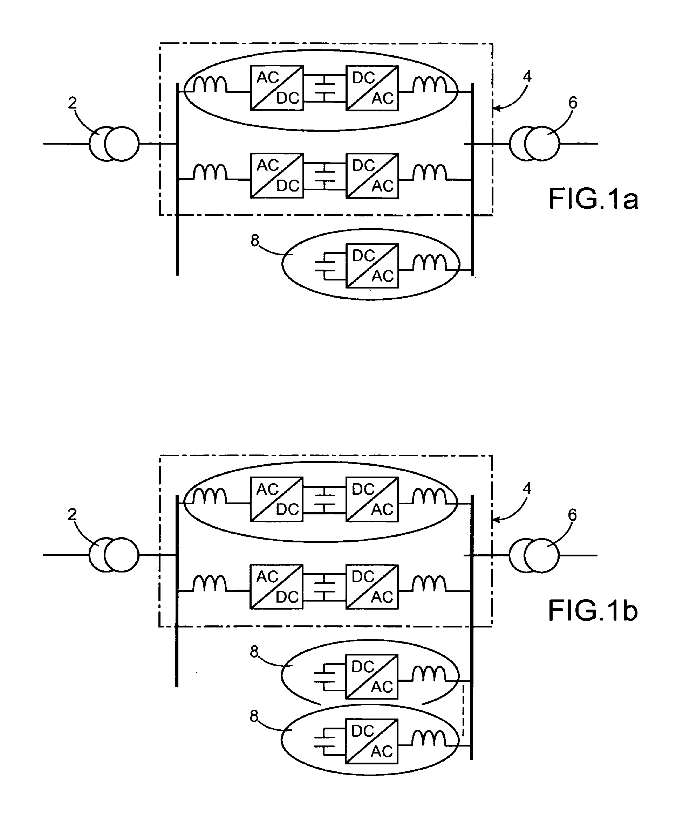

La figure 1a illustre schématiquement un premier mode de réalisation d'un dispositif de protection contre un défaut de court-circuit survenant dans un réseau électrique muni d'un module sécurité de courant nominal In avec un courant de seuil e déclenchement Isd temporisé à une durée Td. Le réseau est alimenté par un convertisseur statique comportant un transformateur d'entrée 2, une pluralité de modules convertisseurs AC-AC 4 montés en parallèle, et un transformateur de sortie 6. Dans ce mode de réalisation, le dispositif comporte en outre un module 8 d'aide au déclenchement du module sécurité monté en parallèle avec les modules convertisseurs AC-AC 4 du convertisseur statique.

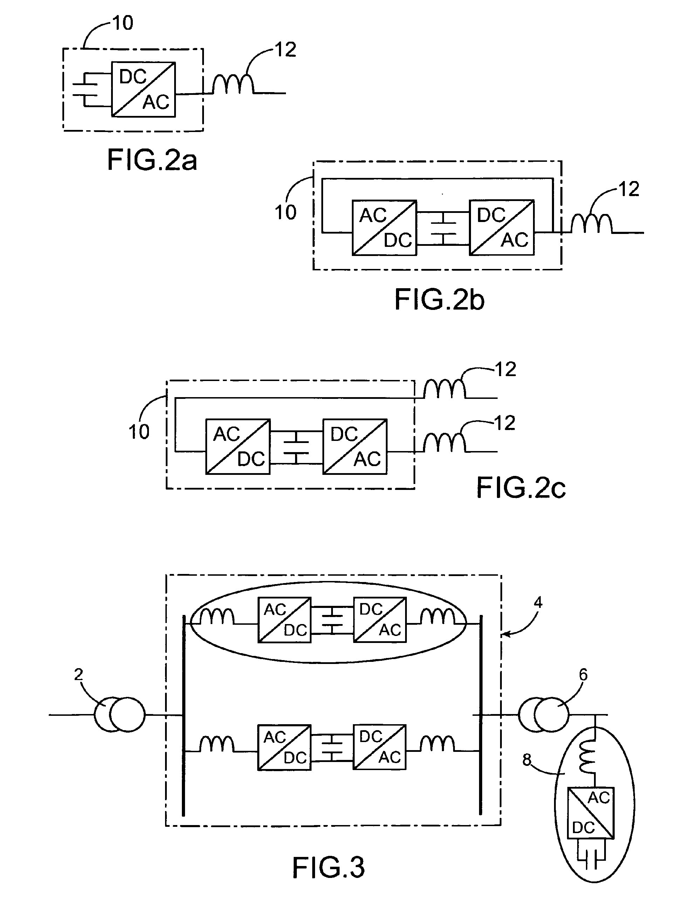

Dans une première variante illustrée par la figure 2a, le module d'aide au déclenchement 8 comporte un convertisseur DC-AC 10 et une inductance de sortie 12.

Dans une deuxième variante illustrée par la figure 2b, le module d'aide au déclenchement 8 comporte un convertisseur AC-AC 10 et une inductance de sortie 12 connectée en parallèle sur les sorties.

Dans une troisième variante illustrée par la figure 2c, le module d'aide au déclenchement 8 comporte un convertisseur AC-AC 10 et deux inductances de sortie 12 connectées sur chaque sortie.

Notons que le dispositif de protection selon l'invention peut comporter une pluralité de modules 8 d'aide au déclenchement montés chacun en parallèle avec les modules convertisseurs, comme illustré à la figure 1b; le nombre de module 8 d'aide au déclenchement dépendant de la valeur du courant de court-circuit nécessaire pour assurer le déclenchement du module de sécurité d'une installation électrique.

Dans une deuxième mode de réalisation illustré par la figure 3, le module d'aide au déclenchement 8 est monté en aval dudit convertisseur statique à un point d'entrée dudit réseau électrique.

Dans une variante du deuxième mode de réalisation, le module 8 d'aide au déclenchement est relié au point d'entrée du réseau électrique via un transformateur de connexion 14.

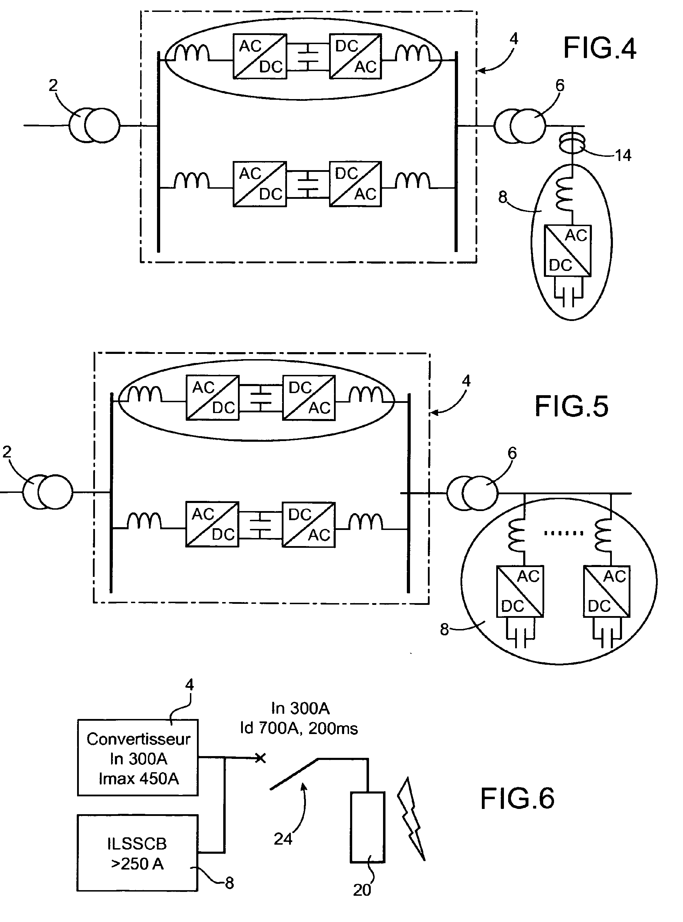

Notons que le dispositif de protection selon l'invention peut comporter une pluralité de modules 8 d'aide au déclenchement montés en parallèle au point d'entrée du réseau électrique, comme illustré à la figure 5 ; le nombre de module 8 d'aide au déclenchement dépendant de la valeur du courant de court-circuit nécessaire pour assurer le déclenchement du module de sécurité d'une installation électrique.

En fonctionnement, en cas de dysfonctionnement d'une installation électrique dans un réseau électrique nécessitant une coupure de courant, une unité centrale détecte le dysfonctionnement et transmet au convertisseur statique une commande pour délivrer un courant de déclenchement du module de sécurité en vue de protéger une ou plusieurs charges de l'installation électrique en aval. Le déclenchement du module de sécurité se traduit par une coupure générale du courant, ou par une coupure du courant consommé par une ou plusieurs charges de l'installation électrique. Généralement, le convertisseur statique est dimensionné, par construction, pour délivrer un courant de défaut maximal donné Id. Grâce au dispositif de l'invention, lorsqu'un défaut de court-circuit survient dans le réseau électrique, l'unité centrale compare le courant maximal de défaut Id au courant de seuil de déclenchement Isd du module de sécurité, et, si le courant maximal de défaut Id est inférieur au courant de seuil de déclenchement Isd pendant la durée de temporisation Td, ladite unité centrale commande au moins un module 8 d'aide au déclenchement dudit module sécurité associé audit convertisseur statique pour délivrer un courant supplémentaire qui s'ajoute au courant Id afin de déclencher le module de sécurité.

Dans une autre utilisation du dispositif selon l'invention, le module 8 d'aide au déclenchement est configuré par l'unité centrale pour absorber une partie de puissance active fournie au réseau.

Dans une autre utilisation du dispositif de l'invention, le module d'aide au déclenchement est utilisé pour réaliser un filtrage actif au point de connexion du convertisseur statique au réseau.

La figure 6 représente schématiquement un réseau électrique 20 alimentée par un convertisseur statique 22 et protégé au point d'alimentation par un module de sécurité 24 ayant un courant nominal de 300A avec un déclenchement à Isd égal à 700A temporisé avec une durée Td égale à 200ms afin de permettre la sélectivité des dispositifs de protection en aval. Dans cet exemple, le convertisseur statique étant dimensionné pour délivrer un courant nominal de 300 A, mais par construction, son courant de défaut Id est limité à 450 A, donc en dessous du seuil de déclenchement du module de sécurité 24. Pour éviter de surdimensionner le convertisseur statique 22, un module 8 d'aide au déclenchement du module de sécurité 24 est associé au convertisseur statique 22 pour délivrer un courant supplémentaire supérieur à 250 A en cas de défaut de court circuit.

Dans une utilisation particulière du dispositif selon l'invention, le module 8 d'aide au déclenchement est configuré pour stocker de l'énergie électrique.

## Revendications

1. Dispositif de protection contre un défaut de court-circuit survenant dans un réseau électrique (20) alimenté par un convertisseur statique (4), où le convertisseur statique est configure pour délivrer un courant maximal de défaut (Id) pour commander le déclenchement d'au moins un module de sécurité (24) ayant un courant de seuil de déclenchement (Isd) et une durée de temporisation de déclenchement (Td), **caractérisé en ce**
**qu'**il comporte au moins un module (8), d'aide au déclenchement dudit module sécurité (24), le module étant configuré pour, en cas de défaut de court-circuit dans le réseau électrique, délivrer un courant supplémentaire qui s'ajoute au courant maximal de défaut (Id) afin de déclencher le module de sécurité, si le courant maximal de défaut Id est inférieur au courant de seuil de déclenchement (Isd) pendant ladite durée de temporisation (Td).

2. Dispositif selon la revendication 1 dans lequel ledit module (8) d'aide au déclenchement comporte au moins un convertisseur DC-AC (10) et au moins une inductance de sortie (12).

3. Dispositif selon la revendication 2 dans lequel ledit module (8) d'aide au déclenchement est monté en parallèle avec ledit convertisseur statique (4).

4. Dispositif selon la revendication 2 dans lequel ledit module (8) d'aide au déclenchement est monté en aval dudit convertisseur statique (4) à un point d'entrée dudit réseau électrique.

5. Dispositif selon la revendication 4 dans lequel ledit module (8) d'aide au déclenchement est relié audit point d'entrée du réseau électrique via un transformateur de connexion (14).

6. Procédé de protection contre un défaut de court-circuit survenant dans un réseau électrique (20) alimenté par un convertisseur statique (4) configuré pour délivrer un courant maximal de défaut (Id) pour commander le déclenchement d'au moins un module sécurité (24) ayant un courant de seuil de déclenchement (Isd) et une durée de temporisation de déclenchement (Td), **caractérisé en ce qu'**il comporte les étapes suivantes:
en cas de défaut de court-circuit dans le réseau électrique,
- comparer le courant maximal de défaut (Id) au courant de seuil de déclenchement (Isd), et
- si le courant maximal de défaut (Id) est inférieur au courant de seuil de déclenchement (Isd) pendant ladite durée de temporisation (Td), commander au moins un module (8) d'aide au déclenchement dudit module sécurité (24) associé audit convertisseur statique (4) pour délivrer un courant supplémentaire qui s'ajoute au courant maximal de defaut (Id) afin de déclencher le module de securité.

7. Procédé selon la revendication 6 dans lequel, ledit module (8) d'aide au déclenchement absorbe une partie de puissance active fournie au réseau.

8. Procédé selon la revendication 6 dans lequel ledit module (8) d'aide au déclenchement réalise un filtrage actif au point de connexion du convertisseur statique au réseau.

9. Procédé selon la revendication 6 dans lequel ledit module (8) d'aide au déclenchement est configuré pour stocker de l'énergie électrique.

10. Procédé selon la revendication 6 dans lequel ledit module (8) d'aide au déclenchement est configuré pour restituer de l'énergie électrique au réseau.

11. Programme d'ordinateur mémorisé sur un support d'enregistrement comportant des instructions pour réaliser, lorsqu'il est exécuté par un ordinateur, les étapes du procédé selon l'une des revendications 6 à 10.

## Patentansprüche

1. Vorrichtung zum Schutz vor einem Kurzschlussfehler, der in einem elektrischen Netzwerk (20) auftritt, das über einen Stromrichter (4) gespeist wird, wobei der Stromrichter dazu ausgelegt ist, einen maximalen Fehlerstrom (Id) abzugeben, um das Auslösen zumindest eines Sicherheitsmoduls (24) anzusteuern, das einen Auslöseschwellenstrom (Isd) und eine Auslöseverzögerungszeit (Td) aufweist, **dadurch gekennzeichnet, dass** sie zumindest ein Auslösehilfsmodul (8) zum Auslösen des Sicherheitsmoduls (24) hat, wobei das Modul dazu ausgelegt ist, im Falle eines Kurzschlusses in dem elektrischen Netzwerk einen zusätzlichen Strom abzugeben, der sich zu dem maximalen Fehlerstrom (Id) hinzufügt, um das Sicherheitsmodul dann auszulösen, wenn der maximale Fehlerstrom (Id) geringer als der Auslöseschwellenstrom (Isd) für die Verzögerungszeit (Td) ist.

2. Vorrichtung nach Anspruch 1, wobei das Auslösehilfsmodul (8) zumindest einen DC-AC-Wandler (10) und zumindest eine Ausgangsdrossel (12) aufweist.

3. Vorrichtung nach Anspruch 2, wobei das Auslösehilfsmodul (8) parallel zum Stromrichter (4) geschaltet ist.

4. Vorrichtung nach Anspruch 2, wobei das Auslösehilfsmodul (8) an einem Eingangspunkt des elektrischen Netzwerks dem Stromrichter (4) nachgeschaltet ist.

5. Vorrichtung nach Anspruch 4, wobei das Auslösehilfsmodul (8) mit dem Eingangspunkt des elektrischen Netzwerks über einen Verbindungstransformator (14) verbunden ist.

6. Verfahren zum Schutz vor einem Kurzschlussfehler, der in einem elektrischen Netzwerk (20) auftritt, das über einen Stromrichter (4) gespeist wird, der dazu ausgelegt ist, einen maximalen Fehlerstrom (Id) abzugeben, um das Auslösen zumindest eines Sicherheitsmoduls (24) anzusteuern, das einen Auslöseschwellenstrom (Isd) und eine Auslöseverzögerungszeit (Td) aufweist, **dadurch gekennzeichnet, dass** es die folgenden Schritte umfasst:
bei einem Kurzschlussfehler in dem elektrischen Netzwerk:
- Vergleichen des maximalen Fehlerstroms (Id) mit dem Auslöseschwellenstrom (Isd), und
- wenn der maximale Fehlerstrom (Id) geringer als der Auslöseschwellenstrom (Isd) für die Verzögerungszeit (Td) ist, Ansteuern zumindest eines Auslösehilfsmoduls (24) zum Auslösen des Sicherheitsmoduls (24), das dem Stromrichter (4) zugeordnet ist, um einen zusätzlichen Strom abzugeben, der sich zu dem maximalen Fehlerstrom (Id) hinzufügt, um das Sicherheitsmodul auszulösen.

7. Verfahren nach Anspruch 6, wobei das Auslösehilfsmodul (8) einen Teil der Wirkleistung aufnimmt, die dem Netzwerk bereitgestellt wird.

8. Verfahren nach Anspruch 6, wobei das Auslösehilfsmodul (8) eine aktive Filterung am Verbindungspunkt des Stromrichters mit dem Netzwerk durchführt.

9. Verfahren nach Anspruch 6, wobei das Auslösehilfsmodul (8) dazu ausgelegt ist, elektrische Energie zu speichern.

10. Verfahren nach Anspruch 6, wobei das Auslösehilfsmodul (8) dazu ausgelegt ist, dem Netzwerk elektrische Energie abzugeben.

11. Computerprogramm, das auf einem Datenträger abgespeichert ist, das Anweisungen umfasst, um bei Ausführung auf einem Computer die Schritte des Verfahrens nach einem der Ansprüche 6 bis 10 auszuführen.

## Claims

1. A device for preventing short circuit faults appearing in an electrical network (20) powered by a static converter (4), where the static converter is configured to deliver a maximum fault current (Id) in order to trigger at least one safety module (24) having a triggering threshold current (Isd) and a triggering time delay (Td), the device being **characterized in that** the module being configured for, in case of short circuit fault in the electrical network, output an additional current which is added to the maximum default current (Id) in order to trigger the safty module (24) it includes at least one triggering assistance module (8) for triggering said safety module (24) if the maximum fault current Id is less than the triggering threshold current Isd during said time delay Td.

2. A device according to claim 1 wherein said module (8) for assisting triggering comprises at least one DC-AC converter (10) and at least one output inductor (12).

3. A device according to claim 2, wherein said module (8) for assisting triggering is connected in parallel with said static converter (4).

4. A device according to claim 2, wherein said module (8) for assisting triggering is connected downstream from said static converter (4) at a point of entry of said electrical network.

5. A device according to claim 4, wherein said module (8) for assisting triggering is connected to said point of entry of the electrical network via a connection transformer (14).

6. A method of preventing short circuit faults appearing in an electrical network powered by a static converter (4) that is configured to deliver a maximum fault current (Id) in order to trigger at least one safety module (24) having a triggering threshold current Isd and a triggering time delay (Td), the method being **characterized in that** it comprises the following steps in the event of a short circuit fault in the electrical network:
· comparing the maximum fault current (Id) with the triggering threshold current (Isd); and
· if the maximum fault current Id is less than the triggering threshold current Isd during said time delay (Td), operating at least one module (8) for assisting triggering of said safety module (24) associated with said static converter (4) to output an additional current which is added to the maximum default current (Id) in order to trigger the safty module (24).

7. A method according to claim 6, wherein, said module (8) for assisting triggering absorbs a portion of the active power supplied to the network.

8. A method according to claim 6, wherein said module (8) for assisting triggering performs active filtering at the point connecting the static converter to the network.

9. A method according to claim 6, wherein said module (8) for assisting triggering is configured to store electrical energy.

10. A method according to claim 6, wherein said module (8) for assisting triggering is configured to return electrical energy to the network.

11. A computer program stored on a recording medium including instructions for implementing, when it is executed by a computer, the steps of the method according to any one of claims 6 to 10.
